# EUROPEAN PATENT SPECIFICATION

(11) **EP 3 233 508 B1**
(45) Date of publication and mention of the grant of the patent: **19.02.2020**
(21) Application number: 15816233.9
(22) Date of filing: 20.11.2015
(51) Int. Cl.: B41M 5/26, B44C 1/22, B44C 1/00, B41M 5/24

(54) **METHOD FOR MANUFACTURING A HOUSEHOLD APPLIANCE COMPONENT WITH A SPECIFIC COLOURING AS WELL AS A HOUSEHOLD APPLIANCE COMPONENT**
VERFAHREN ZUR HERSTELLUNG EINER HAUSHALTSGERÄTEKOMPONENTE MIT SPEZIFISCHER FARBGEBUNG SOWIE HAUSHALTSGERÄTEKOMPONENTE
PROCÉDÉ DE FABRICATION D'ÉLÉMENT D'APPAREIL ÉLECTROMÉNAGER PRÉSENTANT UNE COLORATION SPÉCIFIQUE, ET ÉLÉMENT D'APPAREIL ÉLECTROMÉNAGER

(30) Priority: 19.12.2014 ES 201431887
(43) Date of publication of application: 25.10.2017
(73) Proprietor: BSH Hausgeräte GmbH, 81739 München (DE)
(72) Inventor: AGUILAR RUBIO, Fernando, E-50009 Zaragoza (ES); ESCARTIN BARDUZAL, Andres, E-50009 Zaragoza (ES); ESTER SOLA, Francisco Javier, E-50001 Zaragoza (ES); GIMENO ASIN, Manuel, E-50015 Zaragoza (ES); GIMENO LOPEZ, Oscar, E-50010 Zaragoza (ES); URRUTIA ANGOS, David, E-50009 Zaragoza (ES)
(86) International application number: PCT/IB2015/059004
(87) International publication number: WO 2016/097902

(56) References cited:
- WO-A1-92/05967
- DE-A1- 10 047 083
- JP-A- 2012 161 816
- US-A1- 2006 073 272
- US-A1- 2011 193 929

## Description

The invention relates to a method for manufacturing a household appliance component, in which a metallic surface with a first colour is provide and the surface is structured. Moreover, the invention also relates to a household appliance device.

Such method, and such household appliance, is apparent from JP 2012-161816 A.

Document JP 2012-161816 A teaches a method for laser marking a household appliance component by laser irradiation. Prior to irradiating the surface to be processed is covered by a polypropylene type surface protection film. This surface protecting layer is left essentially undamaged by the laser irradiation.

Document US 2011/0193929 A1 teaches an application of a fluid to a workpiece's surface that is to be treated with a laser for marking. Again it is the workpiece itself that is processed by the laser. The sole purpose of the fluid is to provide appropriate cooling for avoiding damage on the surface. There is no interaction between the fluid and the surface except of the cooling.

In household appliances facia panels or housing elements are known to be designed with individual colouring. In this connection plastic parts are known that are designed as injection moulded components and thereby are generated already with corresponding colouring.

Moreover, it is also known that metal parts are provided that then are individually coated or imprinted or otherwise processed so that they have an individual colouring.

In this connection it is also known that precisely such metal parts are processed by means of a laser beam exerting a direct effect and thereby also at least locally a change in colour occurs individually, which then is also desired in this connection. In particular in this connection colourings that appear metallic, for instance blue or green or yellow or black, can be generated. However, in this connection the range of different colourings in a direct laser processing of the metallic part is also limited.

It is the task of the present invention to provide a method for manufacturing a household appliance component as well as a household appliance component, with which or in which without an additional application of a colour layer an individual colouring can be designed.

This task is solved by a method and a household appliance component according to the independent claims.

In a method for manufacturing a household appliance component according to the invention the household appliance component or at least a basic component thereof is provided with a metallic surface. The surface is manufactured with a first colour and thus then also provided. The surface is structured. An essential idea of the invention is to be seen in that the surface is moistened for structuring and it is acted upon the liquid by means of a laser beam once it has been applied to the surface and thereby a structuring liquid is generated. By the structuring liquid the metallic surface is structured in such a way that the colouring of the surface is changed from the first colour into a second colour that is different therefrom. By the invention a very specific method employing a laser and a liquid is performed, in order to create an individual colouring of the surface. It is thus no longer required to apply an additional colour layer upon this metallic surface, in order to generate the desired final colouring. By this way of proceeding according to the invention, with the laser beam acting upon the applied liquid and changing this liquid then specifically to the effect that in the amended state, that is then characterized by the structuring liquid, it then structures the surface itself, an colour changing option of a household appliance component during the manufacturing process is improved or expanded. By generating this structuring liquid thus a medium in this manufacturing process is temporarily generated, which supports the change in colouring and thus the change from the first colour into the second colour at least essentially. This is a particularly advantageous way of proceeding, since the metallic surface thus also is not structured in an undesired way and the change of colouring is achieved in a particularly precise way. The appearance of this second colour moreover by this way of proceeding according to the invention can be generated in a very high-contrast and homogenous way so that the second colour is also perceived as very uniform.

According to the invention the liquid is heated by the laser beam in such a way that a structuring liquid comprising vapour bubbles is formed. By the then occurring bursting of the vapour bubbles the metallic surface is structured in such a way that the surface appears optically effective with the second colour.

In a particularly advantageous way the colouring of the metallic surface is generated wit the second colour appearing white. The very generating of surfaces appearing white is a particular challenge. Since this colouring in the field of household appliances, however, is very comprehensively and predominantly given, this very colouring is preferably facilitated by the method according to the invention. As has already been set out initially, such a colouring of a metallic surface appearing white up to date is not possible even when using a laser beam, since with a direct effect of the laser beam exerted upon the metallic surface up to date only other colouring than white can be generated.

The relatively strong change in the surface topography rendering the characteristic white colour is caused by the erosion of the metal substrate, if a main part of the liquid is heated and thereby the structuring liquid formed. If this liquid evaporates through the effect of the laser, vapour bubbles are generated. These vapour bubbles expand and collaborate then as a consequence of the increase of a local pressure in the vicinity of the boundary layer between the structuring liquid and the metallic surface. This cavitation process and thus the formation and disintegration of vapour bubbles affects the microhydrodynamic of this area of the liquid and several dynamic jet flows, which hit the surface and have corresponding energy to change the surface.

Thereby a structuring is generated that corresponds to an irregular high distribution of craters, in particular similarly shaped structural spots, which then reflect and/or control the incident light in such a way that this reflection of the incident light occurs chaotically. From this in a very homogenous and clear representation a mat white results as second colour, which even then correspondingly persists and appears as corresponding colour, if the incident light enters at the most different random angles upon the then structured metallic surface.

Generally it is also needs to be pointed out that the liquid merely is a manufacturing medium, which is present in the manufacturing method, however, after the structuring is no longer present and thus the structured surface is provided without this structuring liquid.

In an advantageous way the surface is then entirely formed and provided from a metallic material. The household appliance component, in particular a basic component of this household appliance component provided for changing the colouring in this connection is preferably entirely made from metal.

Preferably, the metallic surface is designed to be made of stainless steel.

In one embodiment it is envisaged that the liquid is applied upon the surface to be static and thus quasi no relative movement occurs between the liquid as a whole and the surface, whilst the laser beam is acting upon it.

However, it may also be envisaged that the liquid is moved relative to the surface, in particular flows on the surface in one direction, when the laser beam acts upon the liquid, in order to then generate therefrom in particular the structure liquid.

Depending on the situation thus variably the liquid can be generated to be either static or dynamic relative to the surface.

In an advantageous way the liquid is provided as an incombustible liquid. In particular it is envisaged that as a liquid distilled water or a glass cleaner or an oil is provided.

In an advantageous way the laser beam is generated with a wavelength in the infrared light range and correspondingly acts upon the liquid.

It may be envisaged that depending on the kind of liquid and/or the thickness of the liquid on the surface the laser beam also at least partly passes through the liquid and directly acts upon the surface.

With regard to the structuring as to the changing of the colouring of the surface the most varied pairs of the liquid and the metallic material of the surface as well as the laser parameter may be envisaged. Preferably, it is envisaged that the higher the correspondence between the solid body of the surface and the liquid the more the substrate and thus the surface is moistened and the smaller can be the thickness of the liquid laser. The smaller the area of the liquid that is heated by the laser beam, the fewer vapour bubbles are generated. Thereby the structuring then will be less and the intensity of the appearance of the second colour, in particular the white colouring reduced.

Moreover it is envisaged that the higher the viscosity of the liquid the higher is also the hydrodynamic resistance and thus also the energy flux generated by the bursting of the vapour bubbles. From this, in turn, results a lower structuring rate of the surface and an involved lower appearance of the second colour. Moreover, a further influence quantity is the boiling point of the liquid. The higher this boiling point, the faster the liquid disappears due to evaporation. Moreover, it is to be generally noted that the lower the energy density of the laser beam acting upon the liquid the more slowly the heating and in particular the boiling of the liquid is achieved and the more slowly the collapsing process of the vapour bubbles occurs, which again leads to a slowed down erosion mechanism and thus a slower structuring of the surface.

Preferably, thus depending on the liquid and its parameters with regard to the composition and the thickness and/or with regard to the laser parameter and/or with regard to the metal of the surface an individual structuring can be achieved. A more intense colouring is achieved, the larger the number of the generated vapour bubbles that then burst between the liquid and the surface and then act upon the surface by the generated jet flows and structure these.

Preferably, a facia panel or a housing part is generated as household appliance component.

Moreover, the invention also relates to a household appliance component, which is manufactured according to a method according to the invention or an advantageous embodiment thereof.

In the following embodiments of the invention are explained in more detail by referring to schematic drawings. These show in:
- Fig. 1: a schematic representation of subcomponents of a device for manufacturing a household appliance component; and
- Fig. 2: a schematic representation of subcomponents of a further embodiment of a device for manufacturing a household appliance component.

In the figures same elements or elements having the same function are equipped with same reference signs.

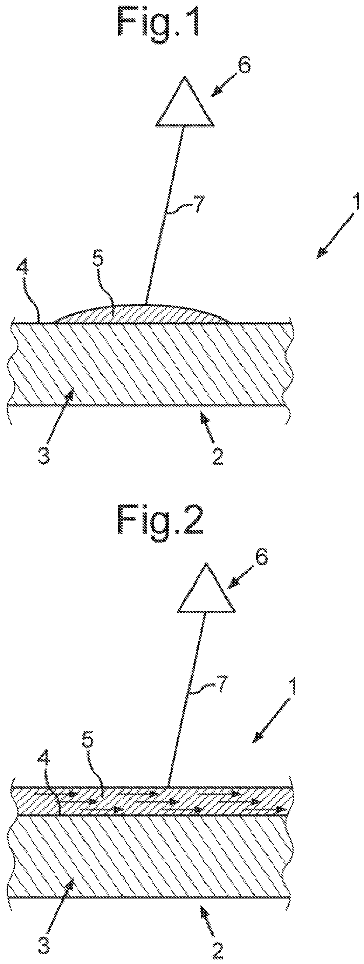

In Fig. 1 a schematic representation of a device 1 is shown, which is configured to manufacture a household appliance component. A household appliance component 2 is shown in the partial sectional view. The household appliance component 2, which then manufactured in the completed state for instance may be a facia panel or a housing component, comprises a basic component 3, which at least in portions, is made in particular completely from metal, preferably precious metal. However, equally a different metal may be envisaged. This basic component 3 at least on one surface 4 comprises a first colour. This means that to a viewer this basic component 3 on the surface 4 appears in a first colour and thus is optically perceived correspondingly with the first colour. In order to form at least this surface 4 in partial areas with a different colouring and thus to then permanently provide it finally with this second colouring, a processing liquid of a liquid 5 that is auxiliarily employed for the manufacturing of a structuring is applied at least in portions on the surface. The liquid 5 thus is applied at least in the partial areas of the surface 4 that are to be changed as to their colouring from a first colour into a second colour.

The liquid 5 in the embodiment shown in Fig. 1 is applied to be static, which means that no relative movement between the area of the liquid 5 as a whole and the basic part 3 occurs.

The device 1 moreover comprises a laser 6, which is an infrared laser and thus comprises a laser beam 7 with a wavelength in the infrared range. This laser beam 7 is directed at the liquid 5 so that it acts upon same correspondingly. This liquid 5, which is an incombustible liquid and for instance distilled water or oil or a pane cleaning agent, is heated by a laser beam 7.

By this heating a structuring liquid is generated that is characterized to the effect that by the heating vapour bubbles are formed that expand and then burst. By the vapour bubbles generated in the border area between the liquid 5 and the surface 4 then dynamic jet flows or energy flows are generated, which hit the surface 4 and by way of acting upon the surface 4 structure it accordingly. Through this structuring an optical appearance is generated, which makes the second colour appear, which is a white colour.

Thus, this means that also a metallic basic part 3 is generated without the application of an additional colour layer upon the surface 4 with a surface appearing white.

Fig. 2 shows an alternative embodiment. In contrast to Fig. 1 it is envisaged here that the liquid 5 is moved relative to the surface 4 and same flows on the surface 4 in one direction.

In both embodiments it is envisaged that the liquid 5 is applied directly to the surface and moistens or wets it.

### LIST OF REFERENCES

- 1: device
- 2: household appliance component
- 3: basic component
- 4: surface
- 5: liquid
- 6: laser
- 7: laser beam

## Claims

1. A method for manufacturing a household appliance component (2, 3), in which a metallic surface (4) with a first colour is provided and the surface (4) is structured, **characterized in that** the surface (4) for structuring is moistened with a liquid (5) and after having been applied to the surface (4) the liquid (5) is acted upon by a laser beam (7) and thereby a structuring liquid comprising vapour bubbles is formed, and by the bursting of the vapour bubbles the surface (4) is structured in such a way that the colouring of the surface (4) is changed from the first colour into a second colour that is different therefrom in such a way that the surface (4) appears optically effective permanently with the second colour.

2. The method according to claim 1, **characterized in that** the colouring of the surface (4) is generated with the second colour appearing white.

3. The method according to any one of the preceding claims, **characterized in that** the surface (4) is provided entirely made from a metallic material.

4. The method according to any one of the preceding claims, **characterized in that** the liquid (5) is applied statically on the surface (4).

5. The method according to any one of the preceding claims 1 to 4, **characterized in that** the liquid (5) is moved relative to the surface (4), in particular flows on the surface (4) in one direction.

6. The method according to any one of the preceding claims, **characterized in that** as liquid (5) an incombustible liquid is provided.

7. The method according to any one of the preceding claims, **characterized in that** as liquid (5) distilled water or a glass cleaner or an oil is provided.

8. The method according to any one of the preceding claims, **characterized in that** the laser beam (7) is generated with a wavelength in the infrared range.

9. The method according to any one of the preceding claims, **characterized in that** as household appliance component (2, 3) a facia panel or a housing element is generated.

10. A household appliance component (2, 3), which is manufactured according to a method according to any one of the preceding claims.

## Patentansprüche

1. Verfahren zum Herstellen einer Haushaltsgerätkomponente (2, 3), bei dem eine Metallfläche (4) von einer ersten Farbe vorgesehen und die Fläche (4) strukturiert wird, **dadurch gekennzeichnet, dass** die Fläche (4) zum Strukturieren mit einer Flüssigkeit (5) befeuchtet wird und die Flüssigkeit (5), nachdem sie auf die Fläche (4) aufgetragen wurde, mit einem Laserstrahl (7) behandelt wird und dadurch eine Strukturierflüssigkeit mit Dampfblasen entsteht und durch Aufplatzen der Dampfblasen die Fläche (4) so strukturiert wird, dass sich die Farbgebung der Fläche (4) von der ersten zu einer zweiten Farbe ändert, die sich so davon unterscheidet, dass die Fläche (4) dauerhaft optisch in der zweite Farbe erscheint.

2. Verfahren nach Anspruch 1, **dadurch gekennzeichnet, dass** die Farbgebung der Fläche (4) so erzeugt wird, dass die zweite Farbe weiß erscheint.

3. Verfahren nach einem der vorhergehenden Ansprüche, **dadurch gekennzeichnet, dass** die Fläche (4) vollständig aus einem Metallmaterial hergestellt wird.

4. Verfahren nach einem der vorhergehenden Ansprüche, **dadurch gekennzeichnet, dass** die Flüssigkeit (5) statisch auf die Fläche (4) aufgetragen wird.

5. Verfahren nach einem der vorhergehenden Ansprüche 1 bis 4, **dadurch gekennzeichnet, dass** die Flüssigkeit (5) in Bezug zur Fläche (4) bewegt wird, insbesondere auf der Fläche (4) in einer Richtung fließt.

6. Verfahren nach einem der vorhergehenden Ansprüche, **dadurch gekennzeichnet, dass** eine nicht brennbare Flüssigkeit als Flüssigkeit (5) bereitgestellt wird.

7. Verfahren nach einem der vorhergehenden Ansprüche, **dadurch gekennzeichnet, dass** destilliertes Wasser oder ein Glasreiniger oder ein Öl als Flüssigkeit (5) bereitgestellt wird.

8. Verfahren nach einem der vorhergehenden Ansprüche, **dadurch gekennzeichnet, dass** der Laserstrahl (7) mit einer Wellenlänge im Infrarotbereich erzeugt wird.

9. Verfahren nach einem der vorhergehenden Ansprüche, **dadurch gekennzeichnet, dass** eine Frontblende oder ein Gehäuseelement als Haushaltsgerätkomponente (2, 3) erzeugt wird.

10. Haushaltsgerätkomponente (2, 3), die gemäß einem Verfahren nach einem der vorhergehenden Ansprüche hergestellt ist.

## Revendications

1. Procédé de fabrication d'un élément d'appareil électroménager (2, 3), dans lequel une surface métallique (4) ayant une première couleur est fournie et la surface (4) est structurée, **caractérisé en ce que** la surface (4) pour structurer est humidifiée avec un liquide (5), et après avoir été appliqué sur la surface (4) le liquide (5) est soumis à l'action d'un faisceau laser (7) et ainsi un liquide structurant comprenant des bulles de vapeur est formé, et par l'éclatement des bulles de vapeur la surface (4) est structurée d'une manière telle que la coloration de la surface (4) est changée de la première couleur en une seconde couleur qui est différente de celle-ci d'une manière telle que la surface (4) apparaît optiquement efficace de manière permanente avec la seconde couleur.

2. Procédé selon la revendication 1, **caractérisé en ce que** la coloration de la surface (4) est générée avec la seconde couleur apparaissant blanche.

3. Procédé selon l'une quelconque des revendications précédentes, **caractérisé en ce que** la surface (4) est fournie en étant entièrement constituée d'un matériau métallique.

4. Procédé selon l'une quelconque des revendications précédentes, **caractérisé en ce que** le liquide (5) est appliqué de manière statique sur la surface (4).

5. Procédé selon l'une quelconque des revendications précédentes 1 à 4, **caractérisé en ce que** le liquide (5) est déplacé par rapport à la surface (4), en particulier s'écoule sur la surface (4) dans une direction.

6. Procédé selon l'une quelconque des revendications précédentes, **caractérisé en ce que**, en tant que liquide (5), un liquide incombustible est fourni.

7. Procédé selon l'une quelconque des revendications précédentes, **caractérisé en ce que**, en tant que liquide (5), de l'eau distillée ou un nettoyant pour verre ou une huile est fourni.

8. Procédé selon l'une quelconque des revendications précédentes, **caractérisé en ce que** le faisceau laser (7) est généré avec une longueur d'onde dans la gamme infrarouge.

9. Procédé selon l'une quelconque des revendications précédentes, **caractérisé en ce que**, en tant qu'élément d'appareil électroménager (2, 3), un panneau de façade ou un élément de carcasse est généré.

10. Élément d'appareil électroménager (2, 3), qui est fabriqué selon un procédé selon l'une quelconque des revendications précédentes.
